# EUROPEAN PATENT APPLICATION

(11) **EP 4 209 252 A1**
(43) Date of publication of application: **12.07.2023**
(21) Application number: 21864757.6
(22) Date of filing: 06.09.2021
(51) Int. Cl.: A62C 37/11, A62C 31/28, A62C 35/60, B05B 7/00

(54) **MULTIFUNCTIONAL SPRINKLER DEVICE CONCEALED IN CEILING FOR SIMULTANEOUSLY REMOVING SMOKE AND TOXIC GAS**

(30) Priority: 04.09.2020 KR 20200113266
(71) Applicant: Kim, Jung Gyu, Seoul 06090 (KR)
(72) Inventor: KIM, Sung Woo, Osan-si, Gyeonggi-do 18132 (KR)
(74) Representative: Sander, Rolf
(86) International application number: PCT/KR2021/012057
(87) International publication number: WO 2022/050799

(57) **Abstract**

The present invention relates to a multifunctional sprinkler device concealed in a ceiling for simultaneously removing smoke and toxic gas. The sprinkler device includes an outer housing embedded in an indoor ceiling and opened downward, an inner housing disposed in the outer housing and opened downward, an intake-type spray head installed in the inner housing and configured to allow water provided from the outside to pass therethrough and spray the water, the intake-type spray head being configured to generate negative pressure on the basis of the Venturi effect, while the water passes therethrough, suction surrounding gas, mix the water and the gas, and discharge the mixed water and gas, a cover plate detachably fitted with a lower portion of the outer housing and configured to cover the outer housing and the inner housing and be separated by receiving pressure of the water sprayed from the intake-type spray head, a power generation unit configured to generate electric power by receiving kinetic energy of the water supplied to the intake-type spray head, and a lighting means configured to operate by receiving electric power from the power generation unit. The multifunctional sprinkler device concealed in a ceiling for simultaneously removing smoke and toxic gas of the present invention configured as described above, in the event of a fire, suctions and removes surrounding smoke and toxic gas while spraying water and at the same time, prevents suffocation by lowering a lethal dose of the toxic gas to be lower than or equal to a safe range within a short time, and provides lighting even in the event of a fire and power outage to guide rapid evacuation.

## Description

### [Technical Field]

The present invention relates to a multifunctional sprinkler device concealed in a ceiling, and more particularly, to a multifunctional sprinkler device concealed in a ceiling for simultaneously removing smoke and toxic gas that in the event of a fire, suctions and removes surrounding smoke and toxic gas by generating negative pressure while spraying firefighting water, and guides rapid evacuation by providing lighting.

### [Background Art]

Various firefighting facilities are mandatorily installed in buildings built recently, and the firefighting facilities meet criteria prescribed in the enhanced building firefighting law. The firefighting facilities include fire extinguishing facilities, alarm facilities, evacuation facilities, firefighting water facilities, and facilities related to fire extinguishing processes. Recently, more advanced and malfunction-free smoke removing facilities or sprinkler devices have been developed and applied. Such firefighting facilities aim to minimize casualties by early detecting and extinguishing a fire.

Among the various firefighting facilities, a sprinkler refers to an automatic firefighting facility that sprays firefighting water in the event of a fire. In general, the sprinkler is disposed in a ceiling of a building and extinguishes a fire by radially spraying water supplied through a stand pipe and a ground pipe.

There are various types of sprinklers including a closed-type sprinkler and an open-type sprinkler. The closed-type sprinkler is installed with a heat-actuated part and has a structure in which a spray nozzle is closed at ordinary times. The open-type sprinkler has no heat-actuated part and has a structure in which a spray nozzle is opened.

In addition, examples of the closed-type sprinkler include a fusible-link sprinkler and a glass-bulb sprinkler. The flash-head fusible-link sprinkler sprays water as a fuse metal piece is separated by being melted at an operating temperature. The glass-bulb sprinkler sprays water as a glass bulb is separated by being broken at an operating temperature.

Smoke and toxic gas, which are created at a fire position, reach a ceiling by obtaining buoyancy made by heat and form a hot gas flow that increases pressure of the ceiling. The smoke and toxic gas are spread toward a cold location in a direction of a low-pressure site and form a thick layer. Therefore, the interior is filled with the smoke and toxic gas.

Heat is a first cause of smoke movement, and pressure is a second cause of smoke movement.

The high-temperature smoke created by the fire is transported while being consistently raised by its buoyancy and increases pressure on the upper layer. Of course, the smoke (non-combusted flammable gas) moves to a place with low pressure. The fire is spread by a flash over phenomenon in which the smoke is ignited at a predetermined critical point by radiant heat.

A sprinkler in the related art cannot remove smoke and toxic gas. There are fatal problems in that when the sprinkler in the related art operates, high-temperature smoke and toxic gas in an upper layer is cooled and create a suffocation environment while being concentrated and moved downward toward the floor, and the concentrated black smoke moved downward creates a visual field "O" smoke-logging environment, which makes it more difficult to find the exit.

The concentrated toxic gas on the floor suffocates a rescue requester within just a few seconds and blocks a visual field of the rescue requester, which makes it almost impossible for the rescue requester to escape.

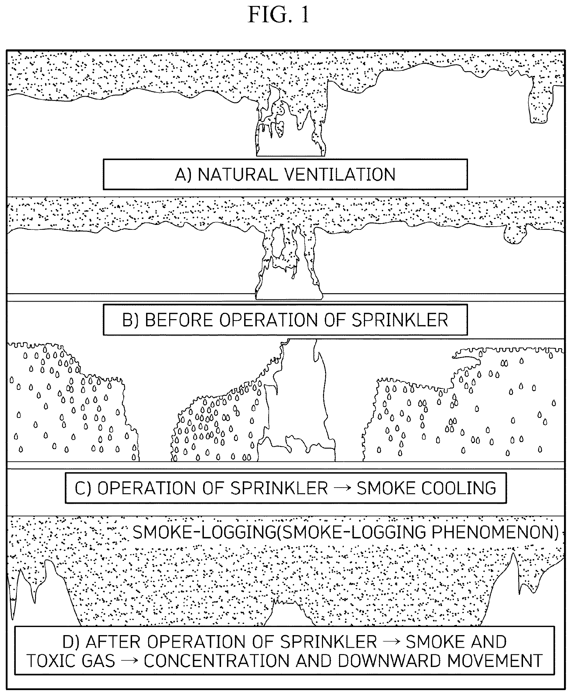

FIG. 1 is a view for explaining a smoke-logging phenomenon occurring in the event of a fire.

As illustrated in FIGS. 1A and 1B, at the initial time of a fire, high-temperature smoke and toxic gas increase pressure while being consistently moved to and collected in an upper layer of an indoor space, the smoke and toxic gas (non-combusted flammable gas) are spread toward a location with low pressure, and the fire is diffused to the periphery by a flash-over phenomenon in which the smoke and toxic gas are ignited.

When the sprinkler operates and sprays fire-fighting water in this state (FIG. 1C), the toxic gas begins to move downward while being cooled and concentrated by the firefighting water. Therefore, as illustrated in FIG. 1D, the entire indoor space including the upper and lower layers becomes dark. Furthermore, the concentration of the toxic (poisonous) gas increases over time in a state of power outage caused by the fire, and in a pitch black situation in which the rescue requesters cannot see anything, the rescue requesters panic, breath more than three times faster, inhale the toxic gas faster, and lose their judgment and become entangled in one another and unable to escape and suffocate. For reference, the rescue requester becomes unconscious if the rescue requester is exposed to toxic gas for 10 to 15 seconds in the event of a fire. The rescue requester may die if the rescue request inhales one or two puffs of hydrogen cyanide (HCN) gas generated in large amount in the event of a fire.

In addition, even though an exhaust device operates to discharge the toxic gas, it takes a long time (much longer than the time for a person to hold his/her breath) to discharge the smoke and toxic gas, with which the interior of the building is filled, and to make the rescue requester breathable. For this reason, it is impossible to keep the golden time for which the rescue requesters can safely evacuate.

There is a need for a device for removing the toxic gas in the interior to reduce a lethal dose of toxic gas to a safe range or less within a short time.

### [Disclosure]

### [Technical Problem]

The present invention has been made in an effort to solve the above-mentioned problem, and an object of the present invention is to provide a multifunctional sprinkler device concealed in a ceiling for simultaneously removing smoke and toxic gas that may, in the event of a fire, suction and remove surrounding smoke and toxic gas while spraying water, and guide rapid evacuation by providing lighting in a power outage state.

### [Technical Solution]

As a technical solution for achieving the above-mentioned object, a multifunctional sprinkler device concealed in a ceiling for simultaneously removing smoke and toxic gas according to the present invention includes: an outer housing embedded in an indoor ceiling and opened downward; an inner housing disposed in the outer housing and opened downward; an intake-type spray head installed in the inner housing and configured to spray water provided from the outside while allowing the water to pass therethrough, the intake-type spray head being configured to generate negative pressure based on the Venturi effect while the water passes therethrough, suction surrounding gas, mix the water and gas, and discharge the mixed water and gas; a cover plate detachably disposed on a lower portion of the outer housing and configured to cover the outer housing and the inner housing, the cover plate being separated by receiving pressure of the water sprayed from the intake-type spray head; a power generation unit configured to generate electric power by receiving kinetic energy of the water supplied to the intake-type spray head; and a lighting means configured to operate by receiving electric power from the power generation unit.

In addition, a catalyst may be provided inside the inner housing and convert carbon monoxide contained in the gas into carbon dioxide by reacting with the gas introduced into the inner housing by the negative pressure.

In addition, the intake-type spray head may include: a nozzle configured to spray downward the water provided from the outside; a Venturi casing configured to allow the water sprayed from the nozzle to pass therethrough and generate the negative pressure based on the Venturi effect to suction surrounding gas and induce the gas to be mixed with the water; and a lifting casing supported on the Venturi casing so as to be movable upward and downward and having a deflector provided at a lower end thereof, the lifting casing being configured to stand by in a raised state and move downward when the water is sprayed.

Further, a plurality of deflector holders may be provided at a lower end of the lifting casing and may each have a vertical guide hole, and the deflector may include: vertical rods respectively inserted into the guide holes and movable upward and downward; separation prevention projections fixed to upper ends of the vertical rods and configured to prevent the vertical rods from being separated from the guide holes; and a main deflector body fixed to lower ends of the vertical rods and positioned vertically below the lifting casing, the main deflector body being configured to spray the sprayed water to the periphery.

Further, the multifunctional sprinkler device may further include: a distal end mixing part provided between the lifting casing and the main deflector body and configured to mix gas and water while colliding with the water sprayed from the nozzle.

In addition, a swirl inducer may be embedded in the nozzle and swirl a flow of water passing through the nozzle.

In addition, the multifunctional sprinkler device may further include: an upper mixing part provided in the Venturi casing and configured to mix water and gas passing through the inside of the Venturi casing.

Further, the multifunctional sprinkler device may further include in the outer or inner housing: a controller configured to output a control signal; a sensor configured to detect the occurrence of a fire and transfer the detection result to the controller; and an alarm device operated by the controller and configured to output a fire alarm signal.

In addition, a heat-actuated device may be mounted on the intake-type spray head and operated to spray water when a preset temperature is reached, and a temperature controller, a heating pad, which is heated by the temperature controller, and a heat transfer member, which operates the heat-actuated device by transferring heat from the heating pad to the heat-actuated device, may be installed between the heat-actuated device and the controller.

### [Advantageous Effects]

The multifunctional sprinkler device concealed in a ceiling for simultaneously removing smoke and toxic gas according to the present invention configured as described above, can, in the event of a fire, suction and remove surrounding smoke and toxic gas while spraying water, maximally lower a lethal dose of the toxic gas to within a safe range within a short time, ensure a visual range, and provide lighting even in the event of power outage to guide rapid evacuation.

### [Description of Drawings]

FIG. 1 is a view for explaining a smoke-logging phenomenon that occurs when a sprinkler in the related art operates in the event of a fire.
FIGS. 2 to 4 are views for explaining an overall configuration and operating method of a multifunctional sprinkler device concealed in a ceiling for simultaneously removing smoke and toxic gas according to an embodiment of the present invention.
FIGS. 5A and 5B are views separately illustrating an intake-type spray head illustrated in FIG. 1.
FIGS. 6A and 6B are cross-sectional views of another intake-type spray head applicable to the sprinkler device according to the embodiment of the present invention.
FIGS. 7A and 7B are cross-sectional views of still another intake-type spray head applicable to a closed-type sprinkler device according to the embodiment of the present invention.
FIGS. 8A and 8B are cross-sectional views of yet another intake-type spray head applicable to an open-type sprinkler device according to the embodiment of the present invention.
FIGS. 9A to 9F are views for explaining a swirl inducer mountable in the sprinkler device according to the embodiment of the present invention.
FIGS. 10A to 10D are top plan views of an upper mixing part illustrated in FIG. 5A.
FIG. 11 is a view illustrating a modified example of a lifting casing applicable to the sprinkler device according to the embodiment of the present invention.
FIGS. 12 and 13 are top plan views of a distal end mixing part installable in the lifting casing of the sprinkler device according to the embodiment of the present invention.
FIGS. 14A and 14B are cross-sectional views illustrating a modified example of the intake-type spray head of the sprinkler device according to the embodiment of the present invention.

### [Best Mode]

Hereinafter, one embodiment according to the present invention will be described in more detail with reference to the accompanying drawings.

Basically, a multifunctional sprinkler device of the present invention serves as a device for removing toxic gas by sucking toxic gas created in the event of a fire and then dissolving the toxic gas in water. In addition, because the multifunctional sprinkler device uses, as firefighting water, water mixed with at least about 78% of inert nitrogen gas (unaffected nitrogen gas) contained in fire smoke, and simultaneously performs fire extinguishing by cooling flame and oxygen cutting-off (fire extinguishing by smothering), the multifunctional sprinkler device has an excellent ability to extinguish a fire to that extent.

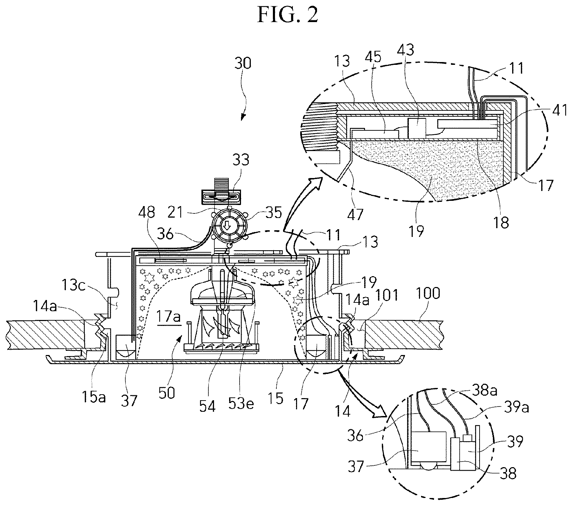

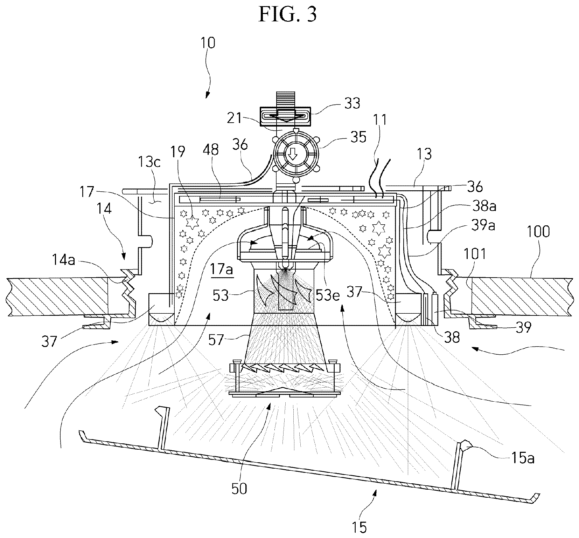

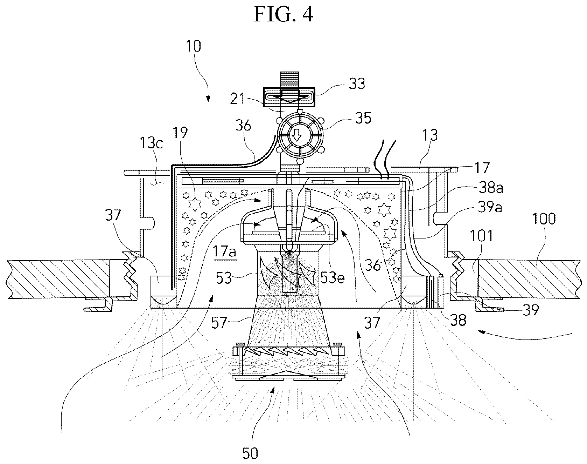

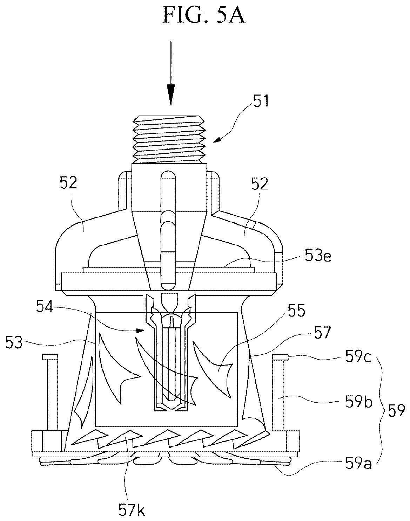

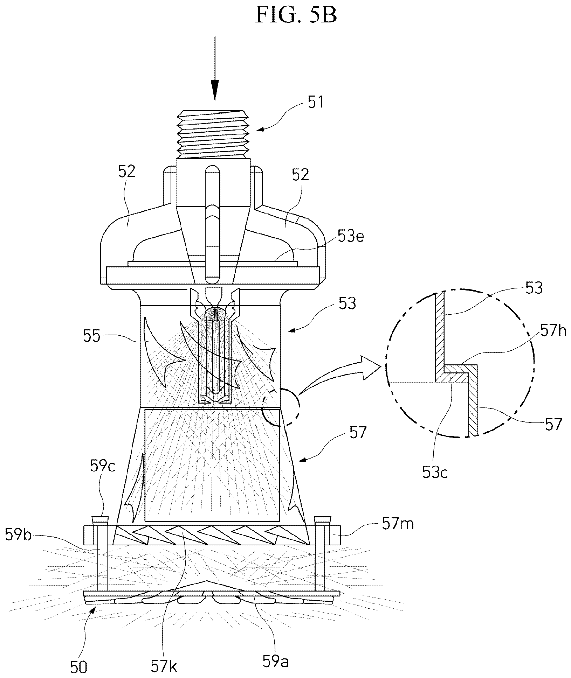

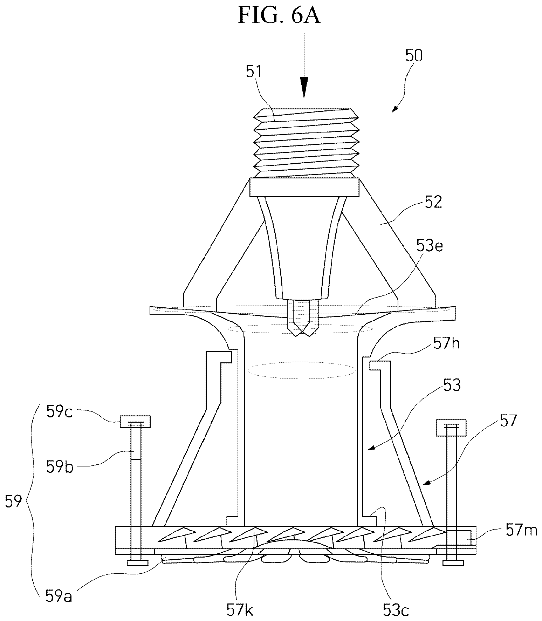

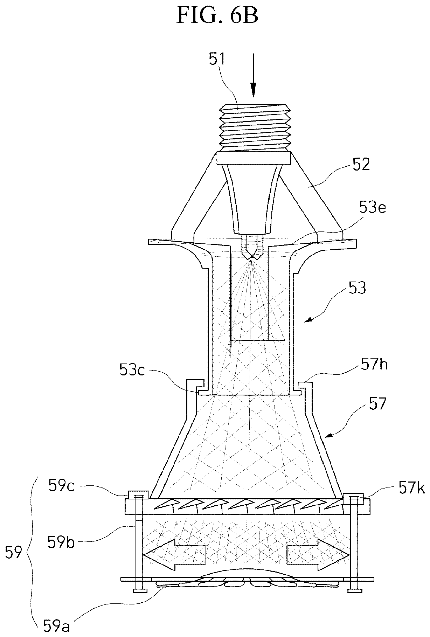

FIGS. 2 to 4 are views for explaining an overall configuration and operating method of a multifunctional sprinkler device 10 concealed in a ceiling for simultaneously removing smoke and toxic gas according to an embodiment of the present invention. FIG. 2 illustrates a stand-by state, FIG. 3 illustrates a state in which the sprinkler device 10 begins to operate in the event of a fire, and FIG. 4 illustrates a state in which the sprinkler device 10 is operating. In addition, FIGS. 5A and 5B are views illustrating an intake-type spray closed-type head illustrated in FIG. 1, and FIGS. 6A and 6B are views separately illustrating an open-type spray head.

As illustrated, the multifunctional sprinkler device 10 concealed in a ceiling for simultaneously removing smoke and toxic gas according to the present embodiment includes an outer housing 13, an inner housing 17, an intake-type spray head 50, a cover plate 15, a holder 14, a power generation unit, and a lighting means.

The outer housing 13 is an approximately cylindrical casing embedded in an installation hole 101 formed in a ceiling 100 and provides a space portion 13c opened downward. The size or shape of the outer housing 13 may be changed as much as needed.

The holder 14 is fixed to a lower end of the outer housing 13. The holder 14 has a ring shape, has a predetermined cross-sectional shape in a circumferential direction thereof, and provides a fixing pleated portion 14a. The fixing pleated portion 14a is a serrated concave-convex portion, and a mounting maintaining portion 15a of the cover plate 15 is caught by the fixing pleated portion 14a.

The inner housing 17 is a cylindrical casing accommodated in the space portion 13c of the outer housing 13 and has a toxic gas concentration space 17a opened downward. The toxic gas concentration space 17a is a space which is to be filled with surrounding toxic gas that is collected in the intake-type spray head 50 to be described below when the intake-type spray head 50 operates. The toxic gas is first collected in the toxic gas concentration space 17a and then sucked into an inlet part 53e of the intake-type spray head 50.

A catalyst 19 and a sealed chamber 18 are positioned in the inner housing 17. The sealed chamber 18 is disposed at an upper side in the inner housing and accommodates a controller 41, a temperature controller 43, a heating pad 45, and a stabilizer 48. The temperature controller 43 and the heating pad 45 may be excluded in case that the intake-type spray head 50 is an open-type spray head.

The catalyst 19 adjoins carbon monoxide in the toxic gas in the toxic gas concentration space 17a and serves to convert carbon monoxide into carbon dioxide. The reason why the catalyst 19 converts carbon monoxide into carbon dioxide is that carbon monoxide is not dissolved in water well. After carbon monoxide is converted into carbon dioxide by the catalyst, the carbon dioxide is dissolved in water. Carbon monoxide is removed from the toxic gas. A general catalyst is used as the catalyst.

Further, an LED lamp 37, which is a lighting means, a sensor 38, and an alarm device 39 are installed outside a lower end of the inner housing 17. The LED lamp 37 emits light to the interior by being operated by electric power applied from a small hydraulic power generator 35 through a power line 36. A rescue requester may find an escape route while identifying the light from the LED lamp 37.

The small hydraulic power generator 35 is a power generation unit configured to generate electric power and is installed outside a connection tube 21. The connection tube 21 is a conduit that connects an outside water supply pipe and the intake-type spray head 50. The small hydraulic power generator 35 generates electric power while operating by receiving kinetic energy of the water passing through the connection tube 21. Reference numeral 33 indicates a filter. The filter 33 filters out impurities from the water supplied to the small hydraulic power generator 35.

The sensor 38 serves to detect a fire. For example, the sensor 38 detects a temperature in the interior or a change in concentration. The sensor 38 transfers information to the controller 41 through a signal cable 38a. The controller 41 outputs an appropriate control signal on the basis of the information transferred from the signal cable 38a. For example, the controller 41 operates the alarm device 39 or informs a manager of the occurrence of fire in a wireless manner.

The alarm device 39 is connected to the controller 41 in a wired manner through a signal cable 39a and outputs a fire alarm signal by being operated by the controller 41. A warning light or a speaker may be applied as the alarm device.

Meanwhile, as described above, the temperature controller 43 and the heating pad 45 are used in case that the applied intake-type spray head 50 is a closed-type spray head. The heating pad 45 is connected to a heat-actuated part 54 through a heat transfer member 47. The heat transfer member 47 transfers heat from the heating pad 45 to the heat-actuated part 54. The heat-actuated part 54 is operated in the same way as a typical heat-actuated part 54 when the heat transferred from the heat transfer member 47 has a preset temperature or higher. When the heat-actuated part 54 is melted or broken, water begins to be sprayed through a nozzle 51 that has been blocked.

The temperature controller 43 adjusts a heating temperature of the heating pad 45. For example, in the event of a fire, the heat-actuated part 54 operates so that the heating pad 45 is heated, a glass bulb or a fuse metal piece is separated by being broken or melted at an accurate operating temperature, and the water in the nozzle is sprayed. The temperature controller 43 is also controlled by the controller 41. Reference numeral 11 indicates an electric power incoming line through which outside electric power is applied to the controller 41.

The cover plate 15 is a circular plate detachably disposed on a lower portion of the outer housing 13 and configured to cover the outer housing and the inner housing. The outer housing 13, the inner housing 17, the intake-type spray head 50, and the installation hole 101 are not visible by being covered by the cover plate 15. The mounting maintaining portion 15a, which is elastically deformable, is provided on the upper surface of the cover plate 15. The mounting maintaining portion 15a is a portion fitted with the fixing pleated portion 14a. When the water is sprayed from the intake-type spray head 50, the cover plate 15 is separated downward by receiving pressure of the water, or the cover plate 15 is separated when a metal piece having a special alloy and bonded to the mounting maintaining portion 15a is melted at an operating temperature.

The intake-type spray head 50 is disposed at a center in the inner housing 17 and sprays water downward by allowing the water provided from the outside through the connection tube 21 to pass therethrough. In particular, the intake-type spray head 50 generates negative pressure based on the Venturi effect while the water passes therethrough. The pressure in the intake-type spray head 50 becomes lower than ambient pressure. When the internal pressure is lowered, high-temperature toxic gas at a ceiling where ambient pressure is continuously raised is, of course, sucked into the intake-type spray head 50.

Liquid particulate-based toxic gas introduced into the intake-type spray head 50 is removed by dissolution and dilution in water, solid particulate-based soot, black dirt, fine particulate matter, and the like are removed by being subjected to physical adsorption, and the remaining nitrogen (N₂) gas mixed with water is sprayed into flames so that the flames are cooled and extinguished by smothering. For example, inert gas such as about 78% of nitrogen gas (unaffected nitrogen) obtains the kinetic energy of water and is applied into flames. In other words, the inert gas reaches the flame by moving along with the water stream.

As illustrated in FIGS. 5A and 5B, the intake-type spray head 50 at the ceiling includes the vertical nozzle 51, a Venturi casing 53, a lifting casing 57, an upper mixing part 55, a distal end mixing part 57k, and a deflector 59.

The nozzle 51 serves to spray water downward while allowing the water supplied through the connection tube 21 to pass therethrough. Because the intake-type spray head 50 illustrated in FIG. 5A is a closed-type spray head, a lower end of the nozzle 51 is closed by the heat-actuated part 54. In the event of a fire, the heat-actuated part 54 is removed so that the water is sprayed through the nozzle 51a. FIG. 5A illustrates the glass-bulb-type heat-actuated part 54, but the same applies to the fusible-link heat-actuated part.

The Venturi casing 53 is a cylindrical member opened upward and downward and is coupled to the nozzle 51 by means of a plurality of struts 52. The strut 52 is a support member configured to fix the nozzle 51 vertically to a center of the inlet part 53e of the Venturi casing 53.

As illustrated in FIGS. 6A and 6B, the inlet part 53e of the Venturi casing 53 has the largest inner diameter. Therefore, a flow velocity of a fluid passing through the Venturi casing 53 increases in the Venturi casing 53. When the flow velocity increases, the pressure in the Venturi casing 53 decreases, and negative pressure (pressure lower than ambient pressure) is formed on the basis of the Venturi principle. To further increase the Venturi effect, a shape of an inner peripheral surface of the Venturi casing 53 may be narrowed within an acceptable range.

As a result, the Venturi casing 53 forms the negative pressure based on the Venturi effect while allowing the water sprayed from the nozzle 51 to pass therethrough, thereby suctioning high-temperature, high-pressure surrounding gas at the ceiling and promoting mixing the gas and the water. The toxic gas introduced into the Venturi casing 53 is mixed with the water.

A support projection 53c is provided at a lower end of the Venturi casing 53. The support projection 53c supports and catches a catching portion 57h at an upper end of the lifting casing 57, thereby preventing the lifting casing 57 from being separated downward.

The upper mixing part 55 is mounted in the Venturi casing 53 and mixes the water and the gas passing through the Venturi casing.

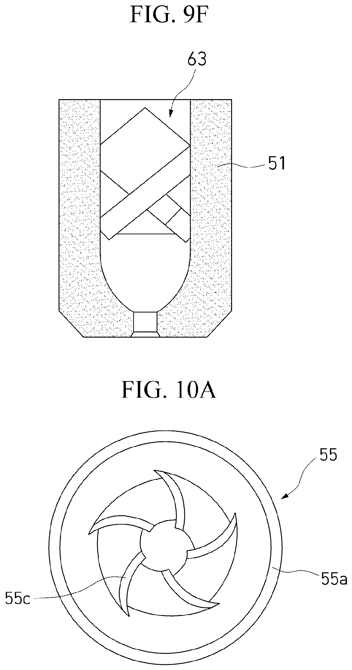

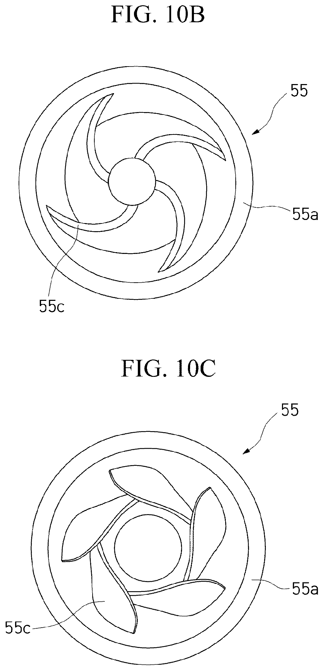

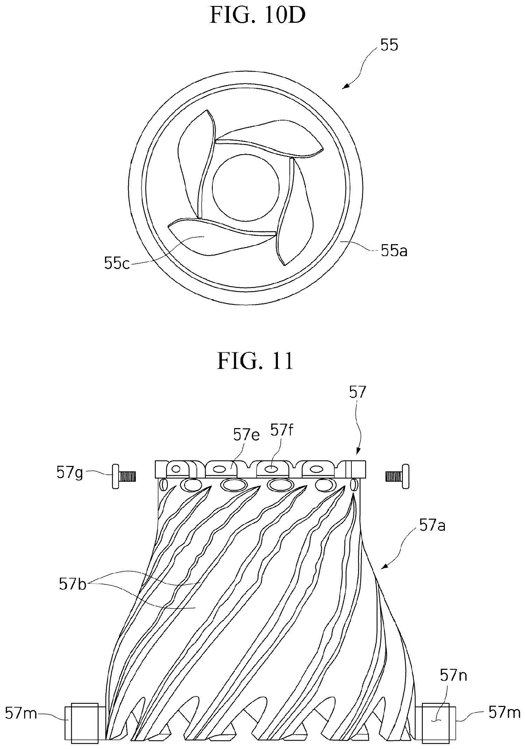

FIGS. 10A to 10D are top plan views of the upper mixing part illustrated in FIG. 5A.

As illustrated, the upper mixing part 55 has an acceleration duct 55a and mixing blades 55c. The acceleration duct 55a is a duct opened upward and downward. An inner diameter of a central portion of the acceleration duct 55a is smaller than an inner diameter of each of upper and lower ends thereof. Thus, a velocity of the fluid passing through the acceleration duct 55a increases of course. When the flow velocity increases, the pressure decreases, and the Venturi phenomenon, which sucks outside gas, is generated.

The mixing blade 55c is a spiral blade integrated with an inner peripheral surface of the acceleration duct 55a. The mixing blade 55c swirls the mixture of water and gas passing through the acceleration duct 55a, thereby inducing more uniform mixing. In addition, because the mixing blade 55c is applied, a flow length of the fluid in the acceleration duct 55a increases, and the time for which the water and the gas are mixed also increases.

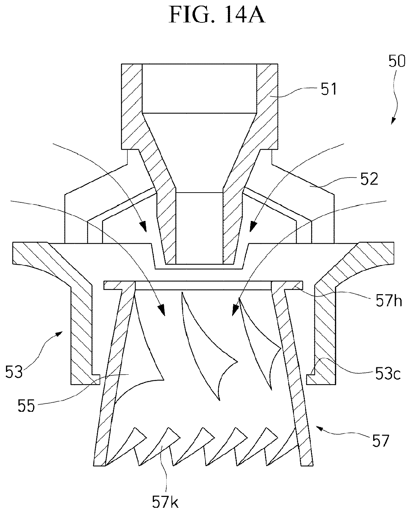

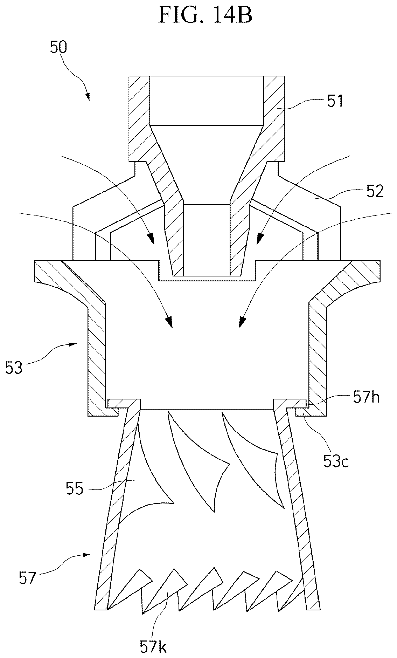

The lifting casing 57 is supported on the Venturi casing 53 so as to be movable upward and downward. The lifting casing 57 is on standby in a raised state, and the lifting casing 57 moves downward when the water is sprayed. The lifting casing 57 may accommodate the Venturi casing 53 therein as illustrated in FIG. 5A or may be accommodated in the Venturi casing 53 as illustrated in FIGS. 14A and 14B.

The lifting casing 57 is on standby in a state of surrounding the Venturi casing 53 at ordinary times (FIG. 5A). In the event of a fire, the lifting casing 57 is moved downward by receiving pressure of the sprayed water and controls a flow of the mixture of water and gas, as illustrated in FIG. 5B.

The shape of the lifting casing may be changed as much as needed as long as the lifting casing performs the above-mentioned function. For example, as illustrated in FIG. 11, the lifting casing 57 may have a guide body 57a.

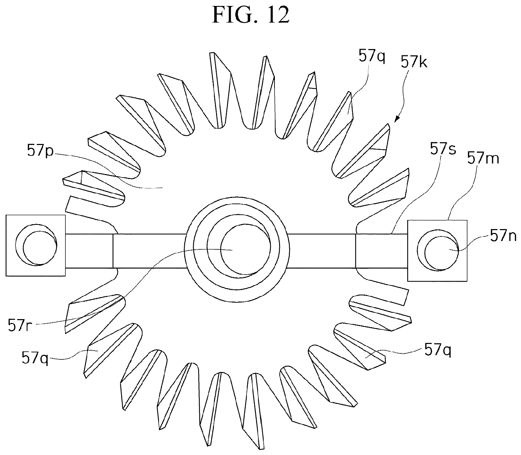

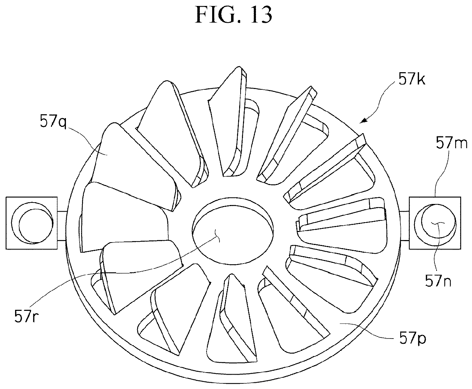

The distal end mixing part 57k serves to mix the gas and the water once again while colliding with the mixture of gas and water having passed through the Venturi casing 53 and the lifting casing 57. The distal end mixing part 57k may be variously implemented. For example, the distal end mixing part 57k may have a structure illustrated in FIG. 12 or 13.

FIGS. 12 and 13 are top plan views of the distal end mixing part 57k installable on the lifting casing 57 of the sprinkler device 10 according to the embodiment of the present invention.

The distal end mixing part 57k illustrated in FIG. 12 has a fixing plate portion 57p and a blade portion 57q. The distal end mixing part 57k is manufactured by cutting a rim portion of a circular plate-shaped member in a radius direction and folding the cut portion upward. The portion, which is folded upward, is the blade portion 57q. The blade portion 57q serves as a deflector configured to mix the water and the gas while colliding with the flow of the mixture of water and gas and to disperse the water to a predetermined area. A center hole 57r is formed at a center of the fixing plate portion 57p. The center hole 57r is a hole through which water is discharged. Fragments of the separated heat-actuated part is discharged through 59 (between 59C and 59a) illustrated in FIG. 6B by hydraulic pressure.

In addition, deflector holders 57m are provided at two opposite sides of the distal end mixing part 57k. The deflector holders 57m are members fixed to two opposite ends of a fixing rod 57s and provide a vertical guide hole 57n. The guide hole 57n accommodates and supports vertical rods 59b.

The distal end mixing part 57k illustrated in FIG. 13 is manufactured by pressing. The blade portion 57q is positioned between an outer periphery edge line of the fixing plate portion 57p and the center hole 57r. The deflector holders 57m are also fixed to two opposite sides of the distal end mixing part 57k in FIG. 13.

Meanwhile, the deflector 59 serves to scatter the water in a lateral direction while colliding with the water having passed through the distal end mixing part 57k. That is, the deflector 59 scatters the water to the periphery. The function of the deflector is identical to that of a general sprinkler.

The deflector 59 has a pair of vertical rods 59b, separation prevention projections 59c, and a main deflector body 59a.

The main deflector body 59a collides with the water sprayed downward and scatters the water to the periphery. Of course, the gas is dissolved in the water or mixed with the water. The vertical rods 59b are straight members fixed at opposite sides with the central portion of the main deflector body 59a interposed therebetween, and lower ends of the vertical rods 59b extend vertically upward while being kept coupled to the main deflector body 59a. The vertical rod 59b may move upward or downward in a state in which the vertical rod 59b is inserted into the guide hole 57n of the deflector holder 57m. The separation prevention projection 59c is a member fixed to an upper end of the vertical rod and prevents the vertical rod from being separated downward from the guide hole.

FIGS. 6A and 6B are cross-sectional views of another intake-type spray head 50 applicable to the sprinkler device according to the embodiment of the present invention.

In the drawings, the reference numerals identical to the above-mentioned reference numerals indicate the same members having the same functions, and a description thereof will be omitted.

The intake-type spray head 50 illustrated in FIGS. 6A and 6B is an open-type spray head. That is, the heat-actuated part is excluded from the lower end of the nozzle 51. The water supplied from the outside passes through the nozzle 51 without change, passes through the Venturi casing 53, the lifting casing 57, and the distal end mixing part 57k, and is then dispersed to the periphery after colliding with the main deflector body 59a. The Venturi casing 53 in FIG. 6A has an empty interior in which the upper mixing part 55 is mounted.

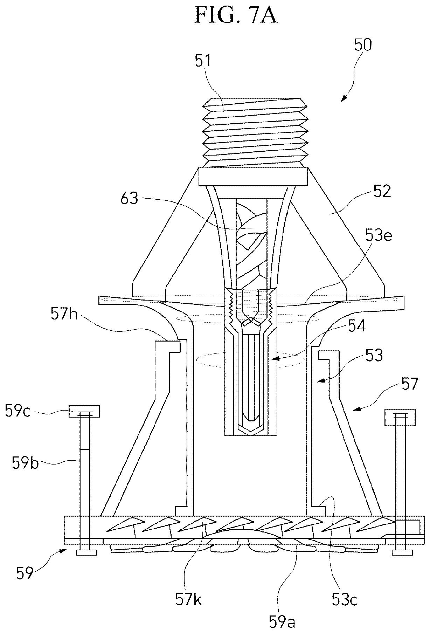

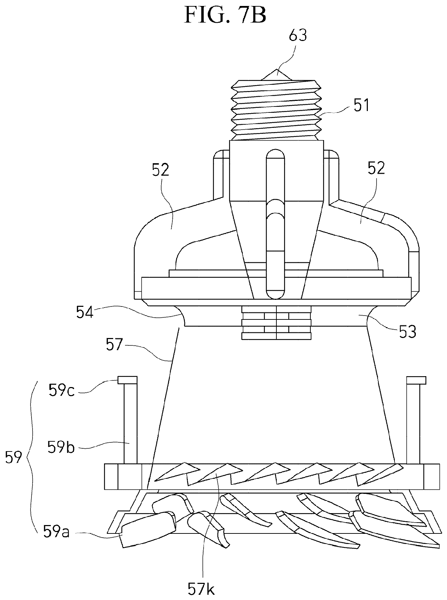

FIG. 7A illustrates a closed-type spray head in which a glass bulb is applied as the heat-actuated part, and FIG. 7B illustrates a closed-type spray head in which molten lead is embedded as the heat-actuated part. A general heat-actuated part is used as the heat-actuated part.

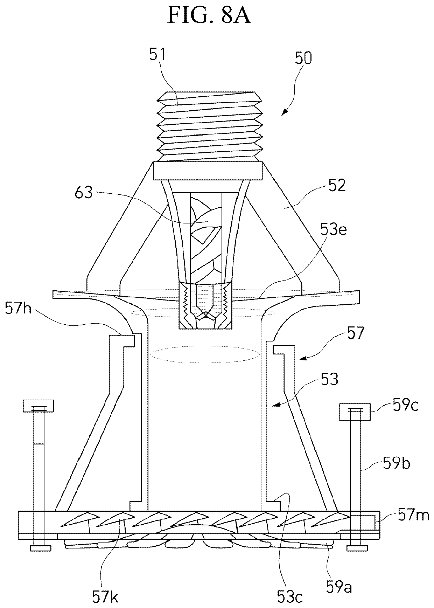

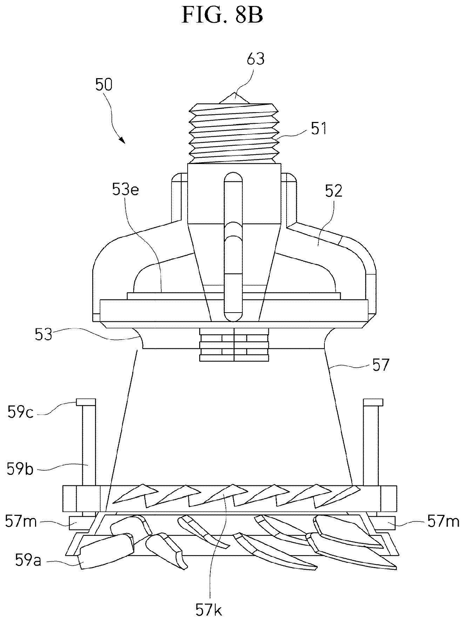

FIGS. 8A and 8B are cross-sectional views of the intake-type spray head that is an open-type spray head and may be applied to different types of water spray nozzle devices according to the present invention.

The intake-type spray head 50 illustrated in FIGS. 8A and 8B has a swirl inducer 63 in the nozzle 51. The swirl inducer 63 swirls a flow of water passing through the nozzle 51. The swirl inducer 63 makes a spiral stream line of water. Of course, this is to improve efficiency in mixing water and gas.

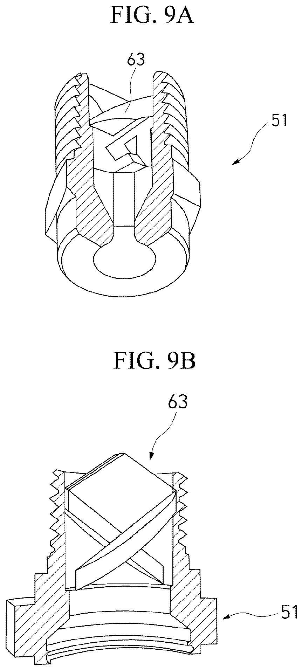

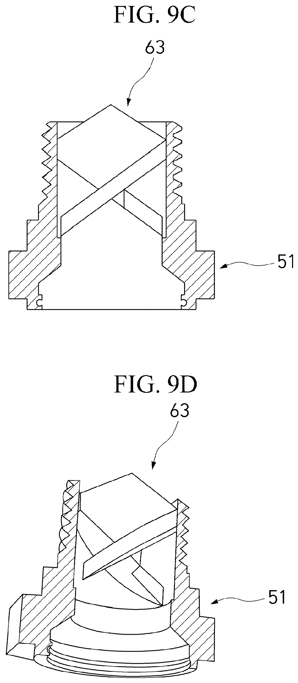

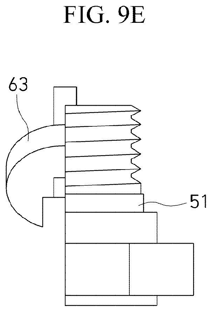

FIGS. 9A to 9F are views illustrating states in which the swirl inducer 63 is mounted in the nozzle 51 when viewed at several angles.

As illustrated, the swirl inducer 63 is fixed into the nozzle 51. The swirl inducer 63 swirls water passing through the nozzle 51.

FIGS. 8A and 8B are cross-sectional views of still another intake-type spray head 50 applicable to the sprinkler device 10 and the water spray nozzle according to the embodiment of the present invention.

FIGS. 8A and 8B illustrate an open-type spray head. That is, no heat-actuated part is provided. As illustrated, it can be seen that the swirl inducer 63 is installed in the nozzle 51.

FIG. 11 is a view illustrating a modified example of the lifting casing 57 applicable to the sprinkler device according to the embodiment of the present invention.

The lifting casing 57 illustrated in FIG. 11 includes the cylindrical guide body 57a widened downward, the deflector holders 57m provided at two opposite sides of the lower end of the guide body 57a, and a catching screw mounting portion 57e integrated with the upper end of the guide body 57a.

The guide body 57a has a spiral guide concave-convex portion 57b. The guide concave-convex portion 57b induces a swirl flow of water flowing downward and guides the flow of water toward the distal end mixing part 57k. The water mixed with the gas flows along the guide concave-convex portion and then is mixed once again while colliding with the distal end mixing part 57k.

An internal thread hole 57f is formed in the catching screw mounting portion 57e. The internal thread hole 57f is a hole to which a catching screw 57g is screw-coupled. The catching screw 57g is screw-coupled to the internal thread hole 57f, and a tip portion of the catching screw 57g protrudes to an inner region of the guide body 57a. The catching screw 57g replaces the catching portion (57h in FIG. 5B) and is caught by the support projection 53c to prevent the lifting casing 57 from being separated downward.

FIGS. 14A and 14B are cross-sectional views schematically illustrating a modified example of the intake-type spray head of the sprinkler device according to the embodiment of the present invention.

The intake-type spray head 50 illustrated in FIGS. 14A and 14B has a structure in which the lifting casing 57 is accommodated in the Venturi casing 53. That is, in the state in which the lifting casing 57 is raised, the lifting casing 57 is accommodated in the Venturi casing 53. In the event of a fire, the lifting casing 57 is separated downward from the Venturi casing 53.

As a result, the sprinkler device 10 of the present invention configured as described above can, in the event of a fire, apply water (mixed with inert gas) to flames while suctioning and removing smoke and toxic gas dispersed in the interior, thereby quickly extinguishing the fire and minimizing a deadly accident caused by suffocation.

While the present invention has been described above in detail with reference to the specific embodiments, the present invention is not limited to the embodiments but may be variously modified by those skilled in the art without departing from the technical spirit of the present invention.

## Claims

1. A multifunctional sprinkler device concealed in a ceiling for simultaneously removing smoke and toxic gas, the multifunctional sprinkler device comprising:
an outer housing embedded in an indoor ceiling and opened downward;
an inner housing disposed in the outer housing and opened downward;
an intake-type spray head installed in the inner housing and configured to spray water provided from the outside while allowing the water to pass therethrough, the intake-type spray head being configured to generate negative pressure based on the Venturi effect while the water passes therethrough, suction surrounding gas, mix the water and gas, and discharge the mixed water and gas;
a cover plate detachably disposed on a lower portion of the outer housing and configured to cover the outer housing and the inner housing, the cover plate being separated by receiving pressure of the water sprayed from the intake-type spray head;
a power generation unit configured to generate electric power by receiving kinetic energy of the water supplied to the intake-type spray head; and
a lighting means configured to operate by receiving electric power from the power generation unit.

2. The multifunctional sprinkler device of claim 1, wherein a catalyst is provided inside the inner housing and configured to convert carbon monoxide contained in the gas into carbon dioxide by reacting with the gas introduced into the inner housing by the negative pressure.

3. The multifunctional sprinkler device of claim 1, wherein the intake-type spray head comprises:
a nozzle configured to spray downward the water provided from the outside;
a Venturi casing configured to allow the water sprayed from the nozzle to pass therethrough and generate the negative pressure based on the Venturi effect to suction surrounding gas and induce the gas to be mixed with the water; and
a lifting casing supported on the Venturi casing so as to be movable upward and downward and having a deflector provided at a lower end thereof, the lifting casing being configured to stand by in a raised state and move downward when the water is sprayed.

4. The multifunctional sprinkler device of claim 3, wherein a plurality of deflector holders is provided at a lower end of the lifting casing and each has a vertical guide hole, and wherein the deflector comprises:
vertical rods respectively inserted into the guide holes and movable upward and downward;
separation prevention projections fixed to upper ends of the vertical rods and configured to prevent the vertical rods from being separated from the guide holes; and
a main deflector body fixed to lower ends of the vertical rods and positioned vertically below the lifting casing, the main deflector body being configured to spray the sprayed water to the periphery.

5. The multifunctional sprinkler device of claim 4, further comprising:
a distal end mixing part provided between the lifting casing and the main deflector body and configured to mix gas and water while colliding with the water sprayed from the nozzle.

6. The multifunctional sprinkler device of claim 3, wherein a swirl inducer is embedded in the nozzle and configured to swirl a flow of water passing through the nozzle.

7. The multifunctional sprinkler device of claim 3, further comprising:
an upper mixing part provided in the Venturi casing and configured to mix water and gas passing through the inside of the Venturi casing.

8. The multifunctional sprinkler device of claim 1, further comprising in the outer or inner housing:
a controller configured to output a control signal;
a sensor configured to detect the occurrence of a fire and transfer the detection result to the controller; and
an alarm device operated by the controller and configured to output a fire alarm signal.

9. The multifunctional sprinkler device of claim 8, wherein a heat-actuated device is mounted on the intake-type spray head and operated to spray water when a preset temperature is reached, and
wherein a temperature controller, a heating pad, which is heated by the temperature controller, and a heat transfer member, which operates the heat-actuated device by transferring heat from the heating pad to the heat-actuated device, are installed between the heat-actuated device and the controller.
